# EUROPÄISCHE PATENTSCHRIFT

(11) **EP 3 310 594 B1**
(45) Veröffentlichungstag und Bekanntmachung des Hinweises auf die Patenterteilung: **24.04.2019**
(21) Anmeldenummer: 16731824.5
(22) Anmeldetag: 13.06.2016
(51) Int. Cl.: B60G 7/00, F16C 7/08

(54) **STREBE FÜR EINE RADAUFHÄNGUNG**
LINK FOR A WHEEL SUSPENSION
ENTRETOISE DE CHÂSSIS POUR UNE SUSPENSION DE ROUE

(30) Priorität: 18.06.2015 DE 102015211191
(43) Veröffentlichungstag der Anmeldung: 25.04.2018
(73) Patentinhaber: ThyssenKrupp Steel Europe AG, 47166 Duisburg (DE); thyssenkrupp AG, 45143 Essen (DE)
(72) Erfinder: JENTSCH, Kai-Uwe, 47447 Moers (DE); SEMLANOJ, Angela, 45138 Essen (DE); NIERHOFF, Daniel, 45468 Mülheim a.d. Ruhr (DE); GIESE, Hans-Erich, 40885 Ratingen (DE)
(74) Vertreter: ThyssenKrupp Steel Europe AG
(86) Internationale Anmeldenummer: PCT/EP2016/063493
(87) Internationale Veröffentlichungsnummer: WO 2016/202737

(56) Entgegenhaltungen:
- EP-A1- 0 296 568
- EP-A1- 0 712 741
- EP-A1- 1 712 379
- EP-A1- 2 228 459
- WO-A1-2014/124822
- WO-A1-2014/129046
- DE-A1- 4 132 779
- DE-A1- 10 255 813
- DE-A1-102008 015 393
- DE-A1-102008 056 271
- DE-A1-102010 036 681
- DE-A1-102011 112 062
- JP-A- 2002 166 714

## Beschreibung

Die Erfindung betrifft eine Strebe für eine Radaufhängung eines Fahrzeuges mit mindestens einem Mittelabschnitt und mindestens zwei Endabschnitten, wobei die Endabschnitte Anschlussstellen zur Aufnahme von Anbindungs- und/oder Verbindungselementen aufweisen.

Streben, insbesondere Zug- oder Druckstreben werden im Fahrzeugbau im Bereich der Radaufhängung verwendet, um eine Verbindung zwischen Karosserie und Radträger zu ermöglichen. Die auf das Fahrzeug in Folge von Beschleunigung, Abbremsen sowie Kurvenfahren einwirkenden Kräfte beanspruchen die Streben enorm. Die an die Strebe gestellten Anforderungen müssen diesen Einflüssen genügen. Der Aufbau der Strebe muss daher so konzipiert sein, dass eine gewisse Stabilität und Steifigkeit des Bauteils gewährleistet ist. Um den Anforderungen gerecht zu werden, aber auch aufgrund von Bauraumrestriktionen, durch die insbesondere angelenkten Vorderräder und der Freigängigkeit der Antriebswellen, werden beispielsweise im Vorderachsenbereich konventionell Schmiede- und Gussteile, insbesondere aus Aluminium eingesetzt. Schmiede- und Gussteile sind relativ teuer in der Herstellung.

Jedes der Dokumente WO 2014/129046 A1, DE 10 2011 112 062 A1, DE 10 2008 056 271 A1, DE 10 2010 036 681 A1, DE 102 55 813 A1, EP 0 712 741 A1, JP-A 2002-166714, DE 41 32 779 A1, und EP 0 296 568 A1 offenbart eine Strebe für eine Radaufhängung eines Fahrzeuges mit einem Mittelabschnitt und zwei Endabschnitten, wobei die Endabschnitte Anschlussstellen zur Aufnahme von Anbindungs- und/oder Verbindungselementen aufweisen und wobei der Mittelabschnitt der Strebe aus zwei Schalen gebildet ist.

Die Strebe die in der EP1 712 379 A1 beschrieben ist, ist aus einer niedrigmanganhaltigen Stahllegierung hergestellt, wobei die Legierung bis 2,5% (Gewichtsprozent) Mangan enthält.

Die Kraftfahrzeugbauteile die in der EP2228459 und in der WO2014/124822 beschrieben sind, sind aus hochmanganhaltigen Stahlwerkstoffen hergestellt, wobei die Stahllegierung mehr als 6% (Gewichtsprozent) Mangan enthält, um eine möglichst hohe Duktilität für die crashrelevanten Kraftfahrzeugbauteile bei maximaler Festigkeit zu erreichen.

Von dem voranstehend erläuterten Stand der Technik ausgehend liegt der vorliegenden Erfindung die Aufgabe zugrunde, eine Strebe bereitzustellen, welche eine ausreichende Stabilität und Steifigkeit für die Bauteillebensdauer aufweist und kostengünstig hergestellt werden kann.

Die Aufgabe wird dahingehend gelöst, dass zumindest der Mittelabschnitt der Strebe aus mindestens zwei Schalen gebildet ist, wobei mindestens eine der Schalen aus einem hochmanganhaltigen Stahlwerkstoff besteht.

Die Herstellung der Schalen, insbesondere Halbschalen erfolgt beispielsweise mittels Tiefziehen oder Abkanten von entsprechend konfektionierten Platinen, welche beispielsweise von einem bandförmigen Vormaterial abgelängt und vorzugsweise auf die abwickelbare Flächen der durch Formgebung, insbesondere durch Tiefziehen zu erzeugenden Geometrien zugeschnitten werden. Diese Umformverfahren sind günstige Alternativen zu der Guss- oder Schmiedetechnik. Durch die Schalenbauweise lassen sich daher kostengünstige Streben herstellen. Insbesondere unter Anwendung eines kalibrierenden Tiefziehens können zudem hochmaßhaltige Halbschalen erzeugt werden, wobei ein geringfügiger Materialüberschuss zumindest abschnittsweise entlang der zu stauchenden Kante der Schale für den während des kalibrierenden Tiefziehens durchzuführenden Stauchvorgang berücksichtigt werden kann. Es können beispielsweise auch mehr als zwei Schalen zur Bildung des Mittelabschnitts der Strebe bereitgestellt werden.

Gemäß einer ersten Ausgestaltung der Erfindung sind die Schalen im Querschnitt im Wesentlichen u-förmig ausgebildet und stoff-, kraft- und/oder formschlüssig im Stumpf- oder Überlappstoß miteinander verbunden. Die mindestens zwei Schalen sind zumindest im Mittenabschnitt der erfindungsgemäßen Strebe derart zueinander angeordnet, dass sie einen Hohlraum einschließen, wodurch im Vergleich zur konventionell hergestellten Strebe aus Vollmaterial Einfluss auf das Bauteilgewicht genommen wird. Die Verbindung im Stumpfstoß ist besonders bevorzugt, da das Material optimal verwertet werden kann.

Vorzugsweise sind die u-förmigen Schalen durch einen Boden und zwei sich daran einstückig anschließende Zargen gebildet, welche winklig, beispielsweise rechtwinklig zum Boden abgestellt sind. Je nach Ausgestaltung der erfindungsgemäßen Strebe können die Zargen auch im spitzen und/oder im stumpfen Winkel zum Boden abgestellt sein.

In Längsrichtung zumindest im Mittenabschnitt der erfindungsgemäßen Strebe können gemäß einer weiteren Ausgestaltung der Erfindung die Querschnitte zumindest abschnittsweise konstant und/oder variabel ausgeführt sein. Abhängig von der Bauraumsituation können die Querschnitte in Längsrichtung der erfindungsgemäßen Strebe beispielsweise entsprechend variieren.

Neben den Querschnitten können gemäß einer weiteren Ausgestaltung der Erfindung auch die Höhe der Zargen und/oder die Breite der Böden in Längsrichtung zumindest im Mittenabschnitt der Strebe konstant und/oder variabel ausgeführt sein. So können in vorteilhafter Weise viele Ausgestaltungsmöglichkeiten im Raum (3D) umgesetzt werden, wobei die beiden Zargen der jeweiligen Schale, insbesondere Halbschale unterschiedliche und lokal veränderliche Höhen aufweisen können, wobei die Gesamthöhe des Bauteils über der Länge variieren kann bzw. individuell ausgebildet sein kann.

Gemäß einer weiteren Ausgestaltung der Erfindung können die Schalen unterschiedliche Dicken aufweisen. Dies hat den Vorteil, dass das Gewicht der Strebe und die Festigkeit und/oder Steifigkeit weiter optimiert werden kann und sich positiv auf den Platzbedarf bzw. auf den Bauraum im Fahrwerksbereich auswirken kann. Die Dicken betragen jeweils 0,3 bis 4,5 mm, insbesondere 0,5 bis 4,0 mm, vorzugsweise 0,8 bis 3,5 mm und besonders bevorzugt 1,0 bis 3,0 mm.

Gemäß einer weiteren Ausgestaltung der Erfindung bestehen die Schalen aus einem Stahl-, Aluminium-, Faserverbund- oder Sandwich-Werkstoff. Je nach Anforderung kann die Strebe aus einem Werkstoff oder aus unterschiedlichen Werkstoffen zusammengesetzt sein. Sandwich-Werkstoffe können unterschiedliche Werkstoffarten (z. B. Metall-Kunststoff-Metall) oder unterschiedliche Werkstoffe einer Gattung (z. B. Metallwerkstoffverbund) umfassen.

Gemäß der Erfindung besteht mindestens eine der Schalen aus hochmanganhaltigen Stahlwerkstoffen. Solche hochdehnfähige Leichtbaustahlwerkstoffe eignen sich hervorragend für die Herstellung von komplexen Geometrien aufgrund ihrer hohen Duktilität bei gleichzeitig hohen Festigkeiten über die Bauteillebensdauer.

Gemäß einer weiteren Ausgestaltung der Erfindung ist mindestens an einem Endabschnitt ein Mittel zur Aufnahme von Anbindungs- und/oder Verbindungselementen, welches vorzugsweise ringförmig ausgebildet ist, stoff-, kraft- und/oder formschlüssig zumindest mit dem Mittelabschnitt der Strebe verbunden. Vorzugsweise ragen zumindest teilweise die zumindest den Mittelabschnitt bildenden Schalen in den Endabschnitt hinein, um eine größere Verbindungsfläche mit dem ringförmigen Mittel bereitzustellen. Ein vollumfängliches Umgreifen des ringförmigen Mittels durch die Blechschalen ist ebenfalls denkbar. Das Mittel ist vorzugsweise als ringförmiges Aufnahmestück ausgebildet.

Gemäß einer weiteren Ausgestaltung der Erfindung ist mindestens an einem Endabschnitt, welcher als Fortführung des aus mindestens zwei Schalen gebildeten Mittelabschnitts der Strebe ausgebildet ist, ein Mittel zur Aufnahme von Anbindungs- und/oder Verbindungselementen, welches vorzugsweise hülsenförmig ausgebildet ist, stoff-, kraft- und/oder formschlüssig in dem aus den Schalen gebildeten Endabschnitt der Strebe integriert. Das Mittel ist vorzugsweise als hülsenförmiges Aufnahmestück ausgebildet.

Gemäß einer bevorzugten Ausgestaltung der Erfindung ist die Strebe eine Zug- und/oder Druckstrebe.

Gemäß einer weiteren Ausgestaltung der Erfindung kann mindestens eine der Schalen mindestens eine Einprägung bzw. Sicke aufweisen. Einprägungen sind Steifigkeit erhöhende Strukturen und können der Strebe insgesamt eine höhere Biege- und Torsionssteifigkeit verleihen.

Gemäß einer weiteren Ausgestaltung der Erfindung kann mindestens eine der Schalen mindestens eine Aussparung aufweisen. Aussparungen ermöglichen, das Gewicht der Strebe weiter zu reduzieren. In welchen Bereichen Masse eingespart und damit verbunden Gewicht reduziert werden kann, wird bauteilspezifisch in der Regel beispielsweise mittels Simulation ermittelt.

Die Anwendung der erfindungsgemäßen Strebe ist nicht auf Kraftfahrzeuge (PKW) beschränkt, vielmehr kann diese Strebe auch in Nutzfahrzeugen, Sonderfahrzeugen aber auch in schienengebundenen Fahrzeugen berücksichtigt werden.

Im Folgenden wird die Erfindung anhand einer Ausführungsbeispiele darstellenden Zeichnung näher erläutert. Gleiche Teile sind mit gleichen Bezugszeichen versehen. Es zeigt
- Fig. 1: eine erfindungsgemäße Strebe in Draufsicht;
- Fig. 2: die erfindungsgemäße Strebe aus Fig. 1 in Seitenansicht;
- Fig. 3a-e: Schnittdarstellungen in verschiedenen Bereichen entlang der erfindungsgemäßen Strebe aus Fig. 2.

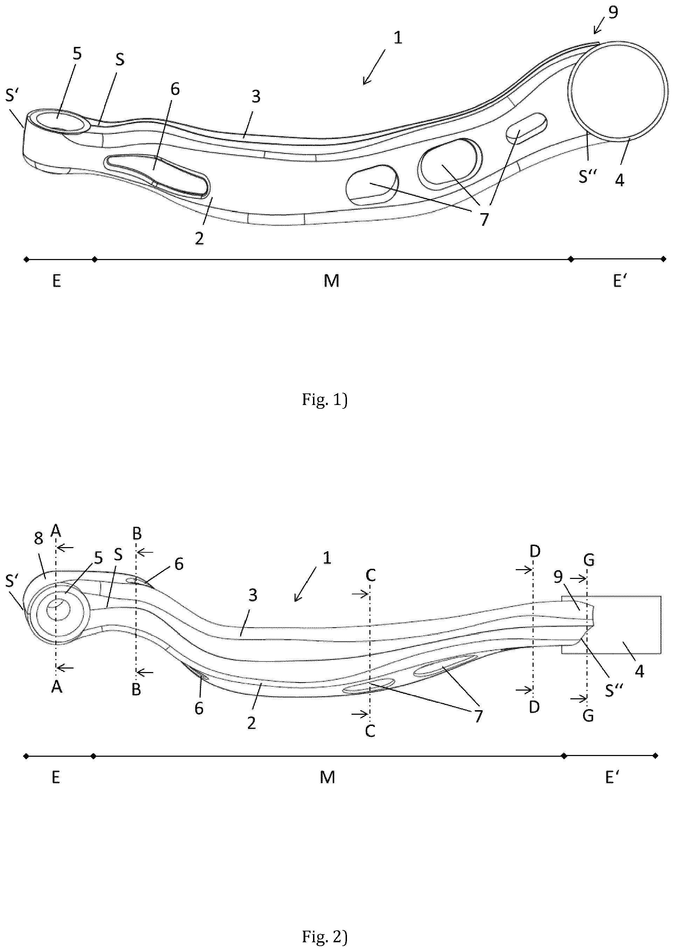

Die Figuren 1 und 2 zeigen ein Ausführungsbeispiel einer erfindungsgemäßen Strebe (1), beispielweise als Zug- oder Druckstrebe, welche im Fahrwerksbereich beispielsweise eines Kraftfahrzeugs, insbesondere bevorzugt im Bereich der Vorderachse und/oder beispielsweise im Bereich der Hinterachse vorgesehen werden kann. Die Strebe (1) weist mindestens einen Mittelabschnitt (M) und mindestens zwei Endabschnitte (E, E') auf. Die Endabschnitte (E, E') weisen Anschlussstellen zur Aufnahme von Anbindungs- und/oder Verbindungselementen auf. Insbesondere der Mittelabschnitt (M) der Strebe (1) ist aus mindestens zwei Schalen (2, 3) gebildet, welche aus einem Werkstoff oder unterschiedlichen Werkstoffen sowie mit gleichen oder zumindest bereichsweise unterschiedlichen Dicken bestehen können. Gemäß der Erfindung bestehen die Schalen aus einem hochmanganhaltigen Leichtbaustahl mit gleicher oder zumindest bereichsweise unterschiedlicher Dicke zwischen 0,3 und 4,5 mm, wodurch komplexe Geometrien bei gleichzeitig hohen Festigkeiten kostengünstig, beispielsweise mittels Tiefziehen hergestellt werden können. Auch die Verwendung von Aluminium- und/oder Faserverbund-Werkstoffen ist denkbar. Die Schalen (2, 3) sind vorzugsweise im Stumpfstoß stoffschlüssig über eine Schweißnaht (S, S'), beispielsweise über eine Laserhybrid- oder MAG-Schweißnaht miteinander verbunden. Der erste Endabschnitt (E) ist beispielsweise als Fortführung (8) des aus mindestens zwei Schalen (2, 3) gebildeten Mittelabschnitts (M) der Strebe (1) ausgebildet. Vor, während und/oder nach der Formgebung der Schalen (2, 3) werden jeweils mindestens eine Ausstanzung positionsgetreu in die Platinen, welche zu Schalen, insbesondere Halbschalen (2, 3) geformt werden, derart eingestanzt bzw. werden alternativ bereits beim Zuschnitt freie Bereiche derart berücksichtigt, so dass sich nach der Formgebung und Verbindung der beiden Halbschalen (2, 3) eine Öffnung ergibt, welche eine Durchgangsöffnung bildet, in welcher ein hülsenförmiges Mittel (5) in Form eines hülsenförmigen Aufnahmestücks aufgenommen werden kann bzw. integriert werden kann. Die Öffnung kann auch beispielsweise nach der Formgebung eingebracht werden. Das hülsenförmige Aufnahmestück (5) ist stoff-, kraft- und/oder formschlüssig in dem aus den Schalen (2, 3) gebildeten Endabschnitt (E) der Strebe (1) integriert und dient zur Aufnahme von nicht dargestellten Anbindungs- und/oder Verbindungselementen, beispielsweise zur Aufnahme eines Radführungsgelenks. Hier nicht dargestellt, können beispielsweise an der Öffnung des ersten Endabschnitts aus dem Material der Halbschalen sogenannte Durchstellungen berücksichtigt werden, welche bei der Formgebung der Halbschalen vorzugsweise mittels Tiefziehen in Form eines Kragens, welcher nach innen oder nach außen weisen kann, hergestellt werden.

Der zweite Endabschnitt (E') wird durch ein ringförmiges Mittel (4) gebildet, welches stoff-, kraft- und/oder formschlüssig zumindest mit dem Mittelabschnitt (M) der Strebe (1) verbunden ist und zur Aufnahme von nicht dargestellten Anbindungs- und/oder Verbindungselementen dient, beispielsweise zur Aufnahme eines Gummi-Metall-Lagers. Das Mittel ist ein ringförmiges Aufnahmestück (4), welches mit den beiden Halbschalen (2, 3) stoffschlüssig über eine Schweißnaht (S"), beispielsweise eine Laserhybrid- oder MAG-Schweißnaht verbunden ist. Zur Vergrößerung der Verbindungsfläche und damit zur Erhöhung der Verbindungssicherheit zwischen dem Mittelabschnitt (M) und dem ringförmigen Aufnahmestück (4) ragen die den zumindest Mittelabschnitt (M) bildenden Schalen (2, 3) zumindest teilweise in den Endabschnitt (E') hinein, was mit (9) gekennzeichnet ist. Ein vollumfängliches Umgreifen des ringförmigen Aufnahmestücks (4) durch die Schalen (2, 3) kann bei Bedarf umgesetzt werden.

Im Bereich des ersten Endabschnitts (E) der Strebe (1) sind Einprägungen bzw. Sicken (6) eingeformt, die zu einer verbesserten Steifigkeit der Strebe (1), insbesondere zur Aussteifung des Endabschnitts (E) führen können.

Ferner kann die Strebe (1) mit Aussparungen (7) versehen sein, welche zu einer Reduzierung des Gewichts beitragen können.

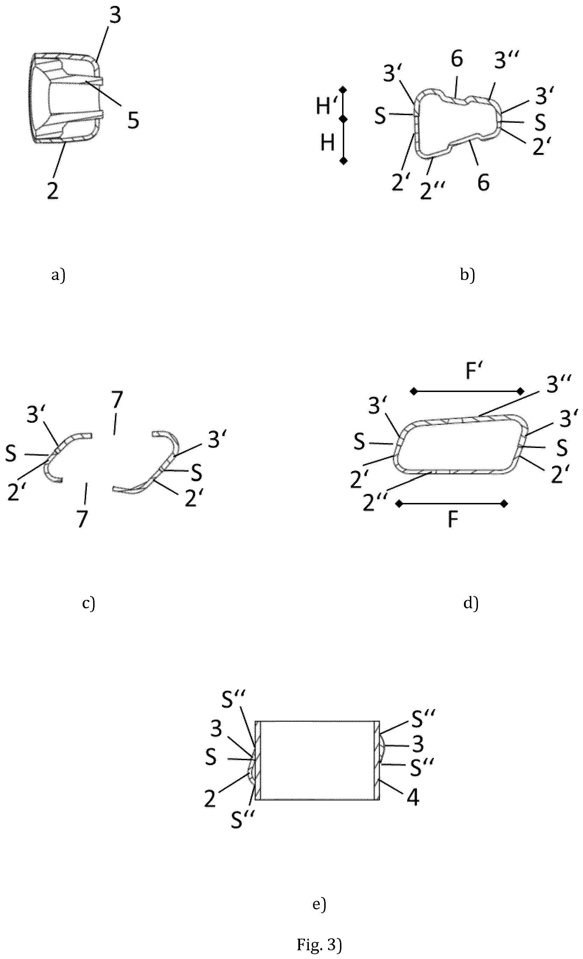

In den Figuren 3a bis 3e sind Querschnitte in verschiedenen Bereichen entlang einer erfindungsgemäßen Strebe (1) dargestellt. Fig. 3a zeigt einen ersten Querschnitt (A-A) in einem ersten Bereich. In diesem Bereich weisen die Schalen, insbesondere Halbschalen (2, 3) einen Boden (2", 3") und jeweils einseitig teilweise eine Zarge (2', 3') auf. Die Ausstanzungen der zumindest einseitigen Zarge (2', 3') in dem ersten Bereich sind vor, während und/oder nach der Formgebung erfolgt oder alternativ bereits im Zuschnitt der Platinen berücksichtigt worden. Durch eine lokale, bereichsweise Kontaktierung zwischen dem Boden (2", 3") der Halbschale (2, 3) wird eine steife Anbindung des hülsenförmigen Aufnahmestücks (5) ermöglicht. Das hülsenförmige Aufnahmestück (5) ist teilweise bündig innerhalb der Durchgangsöffnung der Strebe (1) stoff-, kraft- und/oder formschlüssig integriert. Je nach Anbindungs- und/oder Verbindungselement sind unterschiedliche Ausgestaltungen mit unterschiedlichen Formen, beispielsweise mit unterschiedlichen Außenwie auch Innendurchmessern denkbar. Zur beispielhaften Aufnahme des hülsenförmigen Aufnahmestücks (5) in dem Endabschnitt (E) der Strebe (1) ist der Durchmesser der Öffnung bzw. der Durchgangsöffnung auf der einen Seite größer gewählt als auf der gegenüberliegenden Seite. Dadurch kann beispielsweise ein Einführen des hülsenförmigen Aufnahmestücks (5) erleichtert werden.

Fig. 3b zeigt einen zweiten Querschnitt (B-B) in einem zweiten Bereich. In diesem Bereich weisen die Halbschalen (2, 3) einen Boden (2", 3") und jeweils zwei daran einstückig anschließende Zargen (2', 3') auf. Zu erkennen ist, dass die beiden Halbschalen (2, 3) im Stumpfstoß durch eine Schweißnaht (S), beispielsweise eine Laserhybrid- oder MAG-Schweißnaht miteinander verbunden sind. Weiter zu erkennen ist, dass die Dicken der beiden Schalen (2, 3) nicht gleich sind, da die eine Halbschale (2) eine geringere Dicke von beispielsweise 2,15 mm gegenüber der anderen Halbschale (3) von beispielsweise 2,75 mm aufweist, wodurch Gewicht eingespart werden kann. Infolge der Ausgestaltung der erfindungsgemäßen Strebe (1) sind die Höhen (H') der Zargen (3') der Halbschale (3) im Vergleich zu den Höhen (H) der Zargen (2') der Halbschale (2) größer. Auch die einzelnen Zargen (2', 3') weisen unterschiedlich und lokal veränderliche Höhen (H, H') auf, wobei die Gesamthöhe des Bauteils (Strebe) individuell bzw. über der Länge variierend ausgebildet sein kann. Zudem weisen die Böden (2", 3") der Halbschalen (2, 3) jeweils eine Einprägung bzw. Sicke (6) zur Aussteifung der Strebe (1) auf.

In einem dritten Bereich (C-C) ist in Fig. 3c gezeigt, dass die Höhen (H') der Zargen (3') der Halbschale (2) im Wesentlichen identisch sind, wobei die Höhen (H) der Zargen (2') der Halbschale (2) unterschiedlich ausgeführt sind. Im Boden (2") der einen Halbschale (2) kann mindestens eine Aussparung (7), beispielsweise zur Reduzierung der Masse, eingestanzt sein.

Neben den nahezu identischen Höhen (H, H') der Zargen (2', 3') der Halbschalen (2, 3) in einem vierten Bereich (D-D) zeigt Fig. 3d, dass auch die Breiten (F, F') der Böden (2", 3") der Halbschalen (2, 3) nahezu identisch sind.

Schließlich zeigt Fig. 3e in einem fünften Bereich (G-G) einen Querschnitt durch einen Bereich im Endabschnitt (E'). Zu erkennen ist, wie das ringförmige Aufnahmestück (4) an die zwei Halbschalen (2, 3) durch eine Schweißnaht (S"), beispielsweise eine Laserhybrid- oder MAG-Schweißnaht angebunden ist.

Die erfindungsgemäße Strebe kann auch Endabschnitte aufweisen, welche jeweils nur der Ausgestaltung des ersten Endabschnitts (E) oder nur der Ausgestaltung des zweiten Endabschnitts (E') entsprechen. Es können beispielsweise auch mehr als zwei Endabschnitte vorliegen.

### Bezugszeichenliste

- 1: Strebe
- 2,3: Schale, Halbschale
- 2', 3': Zarge der Halbschale
- 2", 3": Boden der Halbschale
- 4: ringförmiges Aufnahmestück
- 5: hülsenförmiges Aufnahmestück
- 6: Einprägung bzw. Sicke
- 7: Aussparung
- 8: Fortführung der Halbschalen
- 9: Umgreifungsbereich der Halbschalen
- A-A: Schnittebene für Fig. 3a
- B-B: Schnittebene für Fig. 3b
- C-C: Schnittebene für Fig. 3c
- D-D: Schnittebene für Fig. 3d
- G-G: Schnittebene für Fig. 3e
- E, E': Endabschnitt
- F, F': Breite des Bodens
- H, H': Höhe der Zarge
- M: Mittelabschnitt
- S, S', S": Schweißnaht

## Patentansprüche

1. Strebe (1) für eine Radaufhängung eines Fahrzeuges mit mindestens einem Mittelabschnitt (M) und mindestens zwei Endabschnitten (E, E'), wobei die Endabschnitte (E, E') Anschlussstellen zur Aufnahme von Anbindungs- und/oder Verbindungselementen aufweisen, wobei zumindest der Mittelabschnitt (M) der Strebe (1) aus mindestens zwei Schalen (2, 3) gebildet ist,
**dadurch gekennzeichnet, dass**
mindestens eine der Schalen (2, 3) aus einem hochmanganhaltigen Stahlwerkstoff bestehen.

2. Strebe nach Anspruch 1,
**dadurch gekennzeichnet, dass**
die Schalen (2, 3) im Querschnitt im Wesentlichen u-förmig ausgebildet und stoff-, kraft- und/oder formschlüssig im Stumpf- oder Überlappstoß miteinander verbunden sind.

3. Strebe nach Anspruch 2,
**dadurch gekennzeichnet, dass**
die u-förmige Schale (2, 3) im Wesentlichen durch einen Boden (2", 3") und zwei sich daran einstückig anschließende Zargen (2', 3'), welche winklig zum Boden (2", 3") abgestellt sind, gebildet ist.

4. Strebe nach einem der vorgenannten Ansprüche,
**dadurch gekennzeichnet, dass**
die Querschnitte in Längsrichtung zumindest im Mittenabschnitt (M) der Strebe (1) zumindest abschnittsweise konstant und/oder variabel ausgebildet sind.

5. Strebe nach einem der vorgenannten Ansprüche,
**dadurch gekennzeichnet, dass**
die Höhe (H, H') der Zargen (2', 3') und/oder die Breite (F, F') der Böden (2", 3") in Längsrichtung zumindest im Mittenabschnitt (M) der Strebe (1) zumindest abschnittsweise konstant und/oder variabel ausgebildet sind.

6. Strebe nach einem der vorgenannten Ansprüche,
**dadurch gekennzeichnet, dass**
die Schalen (2, 3) zumindest bereichsweise unterschiedliche Dicken aufweisen.

7. Strebe nach einem der vorgenannten Ansprüche,
**dadurch gekennzeichnet, dass**
mindestens an einem Endabschnitt (E') ein Mittel (4) zur Aufnahme von Anbindungs- und/oder Verbindungselementen, welches ringförmig ausgebildet ist, stoff-, kraft- und/oder formschlüssig zumindest mit dem Mittelabschnitt (M) der Strebe (1) verbunden ist.

8. Strebe nach einem der vorgenannten Ansprüche,
**dadurch gekennzeichnet, dass**
mindestens an einem Endabschnitt (E), welcher als Fortführung (8) des aus mindestens zwei Blechschalen (2, 3) gebildeten Mittelabschnitts (M) der Strebe (1) ausgebildet ist, ein Mittel (5) zur Aufnahme von Anbindungs- und/oder Verbindungselementen, welches hülsenförmig ausgebildet ist, stoff-, kraft- und/oder formschlüssig in dem aus den Schalen (2, 3) gebildeten Endabschnitt (E) der Strebe (1) integriert ist.

9. Strebe nach einem der vorgenannten Ansprüche,
**dadurch gekennzeichnet, dass**
die Strebe (1) eine Zug- oder Druckstrebe ist.

10. Strebe nach einem der vorgenannten Ansprüche,
**dadurch gekennzeichnet, dass**
mindestens eine der Schalen (2, 3) mindestens eine Einprägung (6) aufweist.

11. Strebe nach einem der vorgenannten Ansprüche,
**dadurch gekennzeichnet, dass**
mindestens eine der Schalen (2, 3) mindestens eine Aussparung (7) aufweist.

## Claims

1. Link (1) for a wheel suspension of a vehicle comprising at least one middle section (M) and at least two end sections (E, E'), wherein the end sections (E, E') have connecting points for receiving linking and/or joining elements,
wherein
at least the middle section (M) of the link (1) is formed from at least two shells (2, 3),
**characterized in that**
at least one of the shells (2, 3) consists of a steel material containing a high level of manganese.

2. Link according to Claim 1, **characterized in that** the shells (2, 3) are substantially U-shaped in cross section and joined together by integral bonding, force locking and/or form fitting in the butt or lap joint.

3. Link according to Claim 2, **characterized in that** the U-shaped shell (2, 3) is formed substantially by a bottom (2", 3") and two adjoining frames (2', 3') as a single piece, making an angle with the bottom (2", 3").

4. Link according to one of the aforementioned claims, **characterized in that**
the cross sections in the longitudinal direction at least in the middle section (M) of the link (1) are constant and/or variable in configuration at least for a portion.

5. Link according to one of the aforementioned claims, **characterized in that** the height (H, H') of the frames (2', 3') and/or the width (F, F') of the bottoms (2", 3") in the longitudinal direction at least in the middle section (M) of the link (1) are constant and/or variable in configuration at least for a portion.

6. Link according to one of the aforementioned claims, **characterized in that** the shells (2, 3) have different thicknesses at least for a portion.

7. Link according to one of the aforementioned claims, **characterized in that** a means (4) of receiving linking and/or joining elements at least at one end section (E'), being annular in configuration, is connected by integral bonding, force locking, and/or form fitting at least to the middle section (M) of the link (1).

8. Link according to one of the aforementioned claims, **characterized in that** a means (5) of receiving linking and/or joining elements at least at one end section (E), being configured as a continuation (8) of the middle section (M) of the link (1) formed by at least two sheet metal shells (2, 3), being sleevelike in configuration, is integrated by integral bonding, force locking, and/or form fitting in the end section (E) of the link (1) formed from the shells (2, 3).

9. Link according to one of the aforementioned claims, **characterized in that** the link (1) is a tensile or compressive link.

10. Link according to one of the aforementioned claims, **characterized in that** at least one of the shells (2, 3) has at least one embossing (6).

11. Link according to one of the aforementioned claims, **characterized in that** at least one of the shells (2, 3) has at least one cavity (7).

## Revendications

1. Jambe de force (1) destinée à une suspension de roue de véhicule et comprenant au moins une partie médiane (M) et au moins deux parties d'extrémité (E, E'), les parties d'extrémité (E, E') comportant des points de raccordement destinés à recevoir des éléments de rattachement et/ou de liaison, au moins la partie médiane (M) de la jambe de force (1) étant formée d'au moins deux coques (2, 3), **caractérisée en ce que** au moins une des coques (2, 3) est en acier à haute teneur en manganèse.

2. Jambe de force selon la revendication 1, **caractérisée en ce que** les coques (2, 3) ont sensiblement une forme de U en coupe transversale et sont reliées entre elles bout à bout ou à recouvrement par une liaison de matière, une liaison en force et/ou une liaison par complémentarité de formes.

3. Jambe de force selon la revendication 2, **caractérisée en ce que** la coque (2, 3) en forme de U est formée sensiblement par un fond (2", 3") et deux cadres (2', 3') raccordés solidairement l'un de l'autre et orientés angulairement par rapport au fond (2", 3").

4. Jambe de force selon l'une des revendications précédentes, **caractérisée en ce que** les sections transversales sont conçues pour être au moins en partie constantes et/ou variables au moins dans la partie médiane (M) de la jambe de force (1) par référence à la direction longitudinale.

5. Jambe de force selon l'une des revendications précédentes, **caractérisée en ce que** la hauteur (H, H') des cadres (2', 3') et/ou la largeur (F, F') des fonds (2", 3") sont conçues pour être au moins en partie constantes et/ou variables au moins dans la partie médiane (M) de la jambe de force (1) par référence à la direction longitudinale.

6. Jambe de force selon l'une des revendications précédentes, **caractérisée en ce que** les coques (2, 3) ont au moins en partie des épaisseurs différentes.

7. Jambe de force selon l'une des revendications précédentes, **caractérisée en ce que** un moyen (4) destiné à recevoir des éléments de rattachement et/ou de liaison, qui est annulaire, est relié, au moins au niveau d'une partie d'extrémité (E'), au moins à la partie médiane (M) de la jambe de force (1) par une liaison de matière, une liaison en force et/ou une liaison par complémentarité de formes.

8. Jambe de force selon l'une des revendications précédentes, **caractérisée en ce que** au moins au niveau d'une partie d'extrémité (E) qui est conçue comme un prolongement (8) de la partie médiane (M), formée d'au moins deux coques en tôle (2, 3), de la jambe de force (1), un moyen (5) en forme de manchon, destiné à recevoir des éléments de rattachement et/ou de liaison, est intégré dans la partie d'extrémité (E), formée des coques (2, 3), de la jambe de force (1) par une liaison de matière, une liaison en force et/ou une liaison par complémentarité de formes.

9. Jambe de force selon l'une des revendications précédentes, **caractérisée en ce que** la jambe de force (1) est une jambe de force à traction ou à compression.

10. Jambe de force selon l'une des revendications précédentes, **caractérisée en ce que** au moins une des coques (2, 3) comporte au moins un évidement (6).

11. Jambe de force selon l'une des revendications précédentes, **caractérisée en ce que** au moins une des coques (2, 3) comporte au moins un évidement (7).
